(19) **Europäisches Patentamt / European Patent Office / Office européen des brevets**

(11) **EP 4 632 422 A1**

(12) **EUROPEAN PATENT APPLICATION**

(43) Date of publication:
**15.10.2025 Bulletin 2025/42**

(21) Application number: **25169236.4**

(22) Date of filing: **08.04.2025**

(51) International Patent Classification (IPC):
**G01S 5/00** (2006.01) **G01S 5/02** (2010.01)
**G01S 5/14** (2006.01) **G01S 13/76** (2006.01)
**G01S 13/87** (2006.01)

(52) Cooperative Patent Classification (CPC):
**G01S 5/0036; G01S 5/0063; G01S 5/0236;
G01S 5/14; G01S 13/765; G01S 13/878**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.04.2024 IN 202441029180**

(71) Applicant: **NXP B.V.**
**5656 AG Eindhoven (NL)**

(72) Inventors:
• **Parthasarathi, Srivathsa Masthi**
**5656AG Eindhoven (NL)**
• **Corbalán Pelegrín, Pablo**
**5656AG Eindhoven (NL)**
• **Egger, Stefan**
**5656AG Eindhoven (NL)**

(74) Representative: **Krott, Michel**
**NXP Semiconductors**
**Intellectual Property Group**
**High Tech Campus 60**
**5656 AG Eindhoven (NL)**

(54) **SYSTEM AND METHOD FOR MULTI-LATERATION OF USER DEVICE**

(57) A processing circuit of an ultra-wideband (UWB) system communicates in contention-based ranging (CBR) with UWB anchors to transmit a time stamp. The time stamp facilitates determination of distance between the UWB system and each of the UWB anchors. Upon transmission of the time stamp, the UWB system receives details associated with a distance between the UWB system and a corresponding UWB anchor that transmits the distance. The UWB system generates payloads to relay the distance in combination with an updated time stamp indicating a time of generation of the payloads to another UWB anchor. The payloads facilitate in multi-lateration of the UWB system.

FIG. 1

## Description

### FIELD OF USE

The present disclosure relates generally to electronic circuits, and, more particularly, to a system and method for multi-lateration of user devices.

### BACKGROUND

Ultra-wideband (UWB) technology is widely used for ranging purposes. UWB devices such as UWB anchors utilize a broad spectrum of frequencies for precise distance measurement of user devices (*e.g.,* a UWB enabled user device). In a transit scenario, the UWB anchors engage in measuring distances between the user devices and each corresponding UWB anchor. Further, the UWB anchors may intercommunicate to exchange distance information via out-of-band (OOB) communication channels. The communication via OOB communication channels between the UWB anchors requires additional hardware components thereby increasing setup costs for implementing the infrastructure. Alternatively, the UWB anchors may intercommunicate to exchange distance information via in-band communication channels. The communication via in-band communication channels between the UWB anchors may have limited range due to directional nature of the UWB anchors, thereby restricting scalability for distance measurement of the user devices.

### BRIEF DESCRIPTION OF THE DRAWINGS

The following detailed description of the embodiments of the present disclosure will be better understood when read in conjunction with the appended drawings. The present disclosure is illustrated by way of example, and not limited by the accompanying figures, in which like references indicate similar elements.

FIG. 1 illustrates a schematic diagram of an ultra-wideband (UWB) environment in accordance with an embodiment of the present disclosure;

FIGS. 2A-2B are diagrams that illustrate an example of a transit scenario where access control devices of the UWB environment of FIG. 1 determine a location of each user device of the UWB environment of FIG. 1, in accordance with an embodiment of the present disclosure;

FIGS. 3A-3B, collectively, represent a process flow diagram that illustrates multi-lateration of the user device of the UWB environment of FIG. 1, in accordance with an embodiment of the present disclosure;

FIGS. 4A-4C, collectively, represent a flowchart that illustrates a method to relay messages for multi-lateration of the user device by the access control devices of the UWB environment of FIG. 1, in accordance with an embodiment of the present disclosure; and

FIGS. 5A-5B, collectively, represent a flowchart that illustrates a multi-lateration method executed by the access control devices of the UWB environment of FIG. 1, in accordance with an embodiment of the present disclosure.

### DETAILED DESCRIPTION

The detailed description of the appended drawings is intended as a description of the embodiments of the present disclosure and is not intended to represent the only form in which the present disclosure may be practiced. It is to be understood that the same or equivalent functions may be accomplished by different embodiments that are intended to be encompassed within the spirit and scope of the present disclosure.

Overview:

In conventional Ultra-wideband (UWB) systems, multiple anchors (e.g., UWB-enabled ranging devices) communicate with a user device *(e.g.,* a UWB-enabled device) of a user to determine distance between the anchors and the user device based on various ranging techniques *(e.g.,* time of flight, time difference of arrival, or the like). Further, each anchor may communicate the distance to other anchors to facilitate a precise ranging and position determination of the user device using out-of-band (OOB) communication channels (e.g., ethernet cables, Bluetooth low energy, additional routers, or the like). However, this approach requires additional time for the position determination of the user device. Further, to implement OOB communication channels, additional hardware is required, thereby increasing the costs of implementing the UWB system. Alternatively, the anchors may communicate the distance information with other anchors using in-band communication channels. However, the anchors are positioned towards the user device and radiate maximum energy towards the user device. Due to directional nature of UWB antennas of the UWB anchors, the communication between the anchors via the in-band UWB communication channels is susceptible to signal degradation over longer distances.

Various embodiments of the present disclosure disclose a UWB system of a user device. The UWB system enables UWB communication with various access control devices (*e.g.,* the access control devices comprising UWB anchors) that regulate a service to be availed by a first user of the user device. The UWB system may include a processing circuit that may create a ranging session for a first UWB anchor and a second UWB anchor. During a first phase of the ranging session, the processing circuit may generate a first set of payloads that may only include a first time stamp indicating a time of generation of the first set of payloads. Further, the processing circuit may receive a first initiation message from the first UWB anchor. The first initiation message may be indicative of a first distance between the UWB system and the first UWB anchor. The processing circuit may further generate a second set of payloads that may include a second time stamp indicating a time of generation of the second set of payloads, and the first initiation message. The processing circuit may transmit the second set of payloads to the second UWB anchor. Further, the second set of payloads may be processed to determine a second distance between the UWB system and the second UWB anchor and a location of the UWB system relative to the first UWB anchor and the second UWB anchor.

The processing circuit may receive a second initiation message from the second UWB anchor upon transmitting the first set of payloads. The second initiation message may be indicative of the second distance. Further, the processing circuit may generate a third set of payloads that may include a third time stamp indicating a time of generation of the third set of payloads, the first initiation message, and the second initiation message. The processing circuit may further transmit the third set of payloads to the first UWB anchor. The third set of payloads may be processed to determine a third distance between the UWB system and the first UWB anchor and the location of the UWB system. In an example, the user device may be a mobile device, and hence the UWB system may also move along with the user device. The third distance may correspond to the updated first distance considering that the user device is in motion. In a scenario where the user device is stationary, the first distance may be same as the third distance.

The processing circuit of the present disclosure relays an initiation message (e.g., the first initiation message or the second initiation message) received from one UWB anchor to another UWB anchor. The communication between the processing circuit and the UWB anchors may be based on in-band communication channels that may eliminate additional hardware required to implement OOB communication channels in the UWB anchors, thereby reducing cost related to the setup of the UWB anchors. Further, facilitating the communication between the processing circuit and the UWB anchors through the in-band communication channels reduces time required for multi-lateration of user devices compared to conventional methods. Additionally, the communication through the in-band communication channels improves scalability by overcoming limitations due to directional nature of the UWB anchors. Further, a range for multi-lateration of user devices by the UWB anchors installed over a large deployment area may be improved.

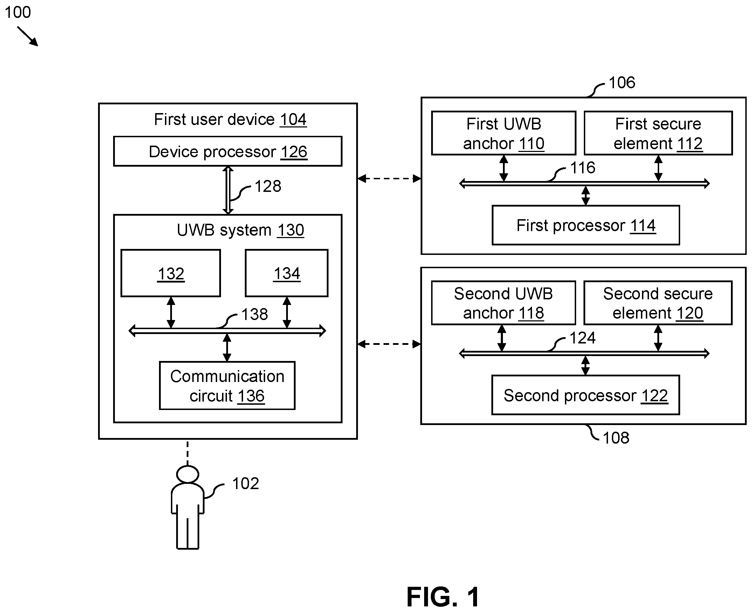

FIG. 1 illustrates a schematic diagram of an ultra-wideband (UWB) environment 100 in accordance with an embodiment of the present disclosure. The UWB environment 100 may include a first user 102 and a first user device 104. The first user device 104 may be associated with the first user 102. For example, the first user device 104 may be in possession of the first user 102.

The UWB environment 100 may further include one or more service providers. A service provider may be a company, an organization, an establishment, or the like, that may offer services to users (*e.g.,* the first user 102). Examples of service providers may include city metros, libraries, hotels, banks, or the like. Further, examples of the services offered by the service providers may include city metros offering transportation services, libraries offering book lending services, hotels offering room access, banks offering financial services, or the like. The service provider may establish infrastructure to offer the services to the users. The infrastructure may thus implement various functions such as user authentication, transaction authorization, user access, or the like. The infrastructure may include multiple access control devices to regulate the services. For example, the UWB environment 100 may further include a first access control device 106 and a second access control device 108 to regulate the services. Examples of the first access control device 106 and the second access control device 108 may include an entry gate, a fare collection terminal, a kiosk, a point-of-sale (POS) terminal, or the like.

Each of the first access control device 106 and the second access control device 108 may include a UWB anchor to enable communication with UWB-enabled user devices. The communication between the first user device 104 and each of the first access control device 106 and the second access control device 108 is enabled by way of UWB ranging sessions (hereinafter referred to as "ranging sessions"). Ranging sessions may be utilized by access control devices (*e.g.,* the first access control device 106 and the second access control device 108) to spatially detect the first user device 104.

First access control device 106:

The first access control device 106 may communicate (*e.g.,* interact) with the first user device 104 to enable the first user 102 to avail the services offered by the service provider by way of the first access control device 106. For example, when the service provider corresponds to a city metro, the first user 102 (*e.g.,* the first user device 104) may be required to pass through entry fare collection terminals (*e.g.,* entry gates with the first access control device 106 installed therein, respectively) located in a metro station to avail the transportation services offered by the service provider. In such a scenario, at the time of the entry, the first user device 104 and the first access control device 106 may communicate (*e.g.*, interact) to enable the first user 102 to enter a metro platform and use the transportation service.

The first access control device 106 may include a first UWB anchor 110, a first secure element 112, and a first processor 114. The first UWB anchor 110, the first secure element 112, and the first processor 114 may communicate with each other by way of a first communication channel 116. Examples of the first communication channel 116 may include a serial peripheral interface (SPI) bus, an inter-integrated channel (I2C), or the like.

First UWB anchor 110:

The first UWB anchor 110 may include suitable circuitry that may be configured to perform one or more operations. For example, the first UWB anchor 110 may be configured to communicate with the first user device 104 using UWB technology. The first UWB anchor 110 may be further configured to generate a setup message when the first user device 104 is detected within a first access control range of the first UWB anchor 110. The first access control range may be a predetermined area within which the first UWB anchor 110 may detect the presence of the first user device 104. In an example, the first access control range may be 50 square meters ($m^2$) from the first UWB anchor 110. The setup message may include information related to configuration of communication parameters between different entities. For example, the setup message may include a UWB frequency range within which the first user device 104 may communicate. The setup message may be a bluetooth low energy (BLE) message, or the like.

The first user device 104 may communicate with the first access control device 106 (*e.g.,* the first UWB anchor 110) in contention-based ranging (CBR). During CBR, the first user device 104 may respond to the setup message after a random time interval to avoid collision of response with other user devices present within the first access control range. The first UWB anchor 110 may be further configured to receive a first set of payloads from the first user device 104 in response to the setup message. The first set of payloads may include a first time stamp indicating a time of generation of the first set of payloads. The first UWB anchor 110 may be further configured to determine a time difference of arrival (TDoA) of the first time stamp to determine a first distance between a UWB system 130 of the first user device 104 and the first UWB anchor 110 (*e.g.,* the first access control device 106).

The first UWB anchor 110 may be further configured to generate a first initiation message. The first initiation message may include a first list of elements. Each element of the first list of elements may include an identifier associated with a UWB system of a plurality of UWB systems (*e.g.,* in a plurality of user devices) that are within the first access control range of the first UWB anchor 110. Each element of the first list of elements may further include one of a distance parameter and a pseudo distance parameter that may correspond to a distance between the corresponding UWB system and the first UWB anchor 110. The distance parameter may correspond to a spatial distance value (*e.g.,* 5 meters). Further, the pseudo distance parameter may correspond to at least one of a group consisting of a received signal strength indicator (RSSI), a time of arrival (ToA), a time of flight (ToF), an angle of arrival (AoA) associated the first initiation message, or the like.

In a non-limiting example, four UWB systems (*e.g.*, in four user devices, respectively) having identifiers A1, A2, A3, and A4 may be present within the first access control range of the first UWB anchor 110. The distance of each of the UWB systems is X1, X2, X3, and X4 from the first UWB anchor 110, respectively. In such an example, the first list of elements can include A1-X1, A2-X2, A3-X3, and A4-X4.

The first UWB anchor 110 may be configured to generate a first ranging message. The first ranging message may include a first ranging management list (RML). The first RML may include a plurality of slots including the plurality of identifiers associated with the plurality of UWB systems that are within the first access control range. An arrangement of the plurality of slots may be indicative of the proximity of the plurality of UWB systems to the first UWB anchor 110. For example, a first slot of the first RML that includes a first identifier associated with the UWB system 130 may be at a first position when the UWB system 130 is nearest to the first UWB anchor 110. Further, each slot of the first RML may correspond to a first unique frequency channel. In an embodiment, the plurality of identifiers correspond to a media access control (MAC) address of the plurality of UWB systems.

The first ranging message may further include a plurality of contention access slots. In an embodiment, the plurality of UWB systems may contend for the plurality of contention access slots. Each contention access slot of the first ranging message may correspond to a frequency channel that is different from the first unique frequency channel included in the first RML. Upon generation of the first initiation message and the first ranging message, the first UWB anchor 110 may be further configured to transmit the first initiation message and the first ranging message to the first user device 104.

First secure element 112:

The first secure element 112 may include suitable circuitry that may be configured to perform one or more operations. For example, the first secure element 112 may be configured to store first cryptographic data that may be utilized during the authentication between the first user device 104 and the first access control device 106. The first cryptographic data may include details associated with the authentication of the first access control device 106 (such as an identifier of the first access control device 106).

First processor 114:

The first processor 114 may include suitable circuitry that may be configured to perform one or more operations such as an access control operation. The access control operation may be executed to control an access of the first user device 104. An example of the access control operation may include allowing the first user 102 to access a public transportation service based on the deduction of a service fare from a financial account of the first user 102 by way of the first user device 104.

The first access control device 106 may have a first operational range associated therewith. The first access control device 106 may execute transactions with user devices within the first operational range. In an example, the first operational range may be 10 $m^2$ from the first access control device 106. Thus, when the first user device 104 is within the first operational range of the first access control device 106, the first processor 114 may be further configured to generate a first authentication request to initiate the authentication with the first user device 104 *(e.g.,* the first user 102). Examples of the authentication may include digital signal verification, key verification, or the like.

Second access control device 108:

The second access control device 108 may communicate (*e.g.*, interact) with the first user device 104 to enable the first user 102 to avail the services offered by the service provider by way of the second access control device 108. For example, when the service provider corresponds to a city metro, the first user 102 *(e.g.,* the first user device 104) may be required to pass through entry fare collection terminals (*e.g.*, entry gates with the first access control device 106 installed therein, respectively) located in a metro station to avail the transportation services offered by the service provider. In such a scenario, at the time of the entry, the first user device 104 and the second access control device 108 may communicate (*e.g.*, interact) to enable the first user 102 to enter a metro platform and use the transportation service.

The second access control device 108 may include a second UWB anchor 118, a second secure element 120, and a second processor 122. The second UWB anchor 118, the second secure element 120, and the second processor 122 may communicate with each other by way of a second communication channel 124. Examples of the second communication channel 124 may include an SPI bus, an I2C, or the like.

Second UWB anchor 118:

The second UWB anchor 118 may include suitable circuitry that may be configured to perform one or more operations. For example, the second UWB anchor 118 may be configured to communicate with the first user device 104 using UWB technology.

The first user device 104 may communicate with the second access control device 108 *(e.g.,* the first UWB anchor 110) in CBR. During CBR, the first user device 104 may communicate with the second access control device 108 after a random time interval to avoid collision of response with the other user devices present within a second access control range. The second access control range may be a predetermined area within which the second UWB anchor 118 can detect the presence of the first user device 104. The second UWB anchor 118 may be further configured to receive a second set of payloads from the first user device 104. The second set of payloads may include a second time stamp indicating a time of generation of the second set of payloads. The second set of payloads may further include the first initiation message transmitted by the first UWB anchor 110. The second UWB anchor 118 may be further configured to determine the first distance based on the first initiation message. Additionally, the second UWB anchor 118 may be further configured to determine a TDoA of the second time stamp to determine a second distance between the first user device 104 and the second UWB anchor 118 *(e.g.,* the second access control device 108).

The second UWB anchor 118 may be further configured to store information related to a gate distance in the second secure element 120. The gate distance may correspond to a distance between the first UWB anchor 110 and the second UWB anchor 118 *(e.g.,* the first access control device 106 and the second access control device 108). The second UWB anchor 118 may be further configured to determine a location of the first user device 104 *(e.g.,* UWB system 130) based on the first distance, the second distance, and the gate distance. In an embodiment, the location of the first user device 104 may be relative to the first UWB anchor 110 and the second UWB anchor 118.

The second UWB anchor 118 may be further configured to generate a second initiation message. The second initiation message may include a second list of elements. Each element of the second list of elements may include an identifier associated with a UWB system of a plurality of UWB systems (*e.g.*, in the plurality of user devices) that are within the second access control range of the second UWB anchor 118. Each element of the second list of elements may further include one of a distance parameter and a pseudo distance parameter that may correspond to a distance between the corresponding UWB system and the second UWB anchor 118. The distance parameter may correspond to a spatial distance value (*e.g.*, 5 meters). Further, the pseudo distance parameter may correspond to at least one of a group consisting of an RSSI, a ToA, a ToF, an AoA associated with the second initiation message, or the like.

The second UWB anchor 118 may be further configured to arrange the second list of elements based on the location of the first user device 104 (*e.g.*, the UWB system 130). The second list of elements may be arranged such that a first element associated with the first user device 104 is positioned based on proximity of the first user device 104 to the second UWB anchor 118. For example, the first element may be present at an initial position in the second list of elements when the first user device 104 (*e.g.*, the UWB system 130) is closest to the second UWB anchor 118 among the plurality of UWB systems. The first element may include the first identifier associated with the UWB system 130 and the second distance.

The second UWB anchor 118 may be further configured to generate a second ranging message including a second RML. The second RML may include the plurality of identifiers associated with the plurality of UWB systems. In an embodiment, the identifier associated with the user devices corresponds to the MAC address. The second UWB anchor 118 may be further configured to transmit the second initiation message and the second ranging message to the first user device 104.

The second RML may include a plurality of slots including the plurality of identifiers associated with the plurality of UWB systems that are within the second access control range. In an embodiment, the second UWB anchor 118 may be further configured to assign a first priority value to the UWB system 130 upon determination of the location of the UWB system 130. In an example, the first user device 104 may initiate authentication with the second UWB anchor 118 based on the first priority value assigned by the second UWB anchor 118. An arrangement of the plurality of slots of the second RML including the plurality of identifiers may be indicative of the proximity of the plurality of UWB systems to the second UWB anchor 118 and based on the first priority value. For example, a first slot of the second RML that includes the first identifier associated with the UWB system 130 may be at a first position when the first priority value indicates that the UWB system 130 is nearest to the second UWB anchor 118 among the plurality of UWB systems. Further, each slot of the second RML may correspond to a second unique frequency channel. Thus, the second RML may include a plurality of second unique frequency channels. In an embodiment, the plurality of identifiers corresponds to the MAC address of the plurality of UWB systems.

The second ranging message may further include a plurality of contention access slots. In an embodiment, the plurality of UWB systems may contend for the plurality of contention access slots. Each contention access slot of the second ranging message may correspond to a frequency channel that is different from the plurality of second unique frequency channels included in the second RML. Upon generation of the second initiation message and the second ranging message, the second UWB anchor 118 may be further configured to transmit the second initiation message and the second ranging message to the first user device 104. For the sake of ongoing discussion, it is assumed that the plurality of UWB systems present within the first access control range of the first UWB anchor 110 and the second access control range of the second UWB anchor 118 are same.

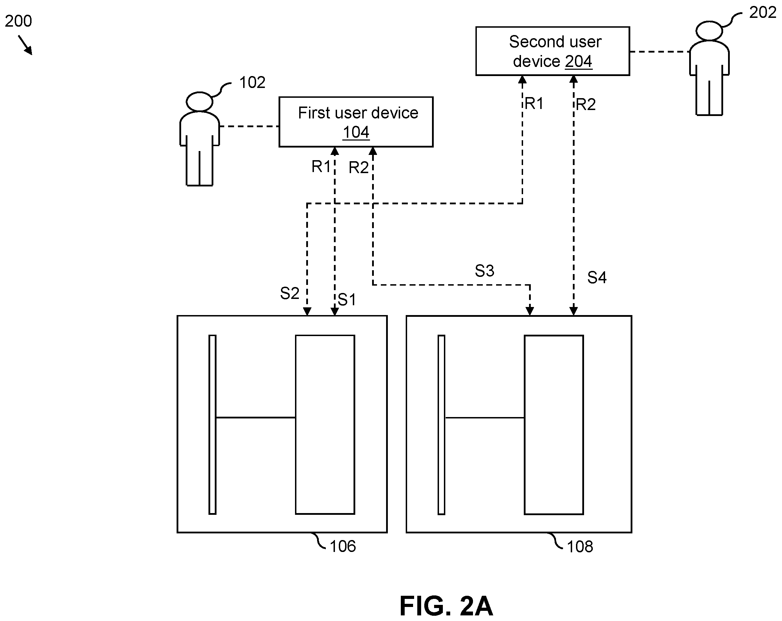

For the sake of brevity, the UWB environment 100 is shown to include the first user device 104, the first access control device 106, the second access control device 108. However, in various other embodiments, the UWB environment 100 may include a second user device (shown in FIG. 2A). Additionally, the UWB environment 100 may include a plurality of access control devices for multi-lateration of the first user device 104. The plurality of access control devices may perform multi-lateration of the first user device 104 to determine a location of the first user device 104. The location of the first user device 104 may be relative to the plurality of access control devices and based on distance information relayed by the first user device 104 and known positions of each of the plurality of access control devices.

The first UWB anchor 110 may be further configured to receive a third set of payloads from the first user device 104. The third set of payloads may include a third time stamp indicating a time of generation of the third set of payloads. The third set of payloads may further include the second initiation message transmitted by the second UWB anchor 118. In an embodiment, the third set of payloads may further include the first initiation message. The first UWB anchor 110 may be further configured to determine the first distance based on the first initiation message. The first UWB anchor 110 may be further configured to determine the second distance based on the second initiation message. Additionally, the first UWB anchor 110 may be further configured to determine a TDoA of the third time stamp to determine a third distance between the first user device 104 and the first UWB anchor 110 (*e.g.*, the first access control device 106). In an example, the third distance may correspond to the updated first distance as the first user device 104 that includes the UWB system 130 proceeds towards the first UWB anchor 110.

The first UWB anchor 110 may be further configured to store information related to the gate distance in the first secure element 112. The first UWB anchor 110 may be further configured to determine the location of the UWB system 130 based on the second distance, the third distance, and the gate distance. In an embodiment, the first UWB anchor 110 may be further configured to assign a second priority value to the UWB system 130 upon determination of the location of the UWB system 130. In an example, the first user device 104 may initiate authentication with the first UWB anchor 110 based on the second priority value assigned by the first UWB anchor 110.

Second secure element 120:

The second secure element 120 may include suitable circuitry that may be configured to perform one or more operations. For example, the second secure element 120 may be configured to store second cryptographic data that may be utilized during the authentication between the user devices and the second access control device 108. The second cryptographic data may include details associated with the authentication of the second access control device 108 (such as an identifier of the second access control device 108).

Second processor 122:

The second processor 122 may include suitable circuitry that may be configured to perform one or more operations such as the access control operation. The access control operation may be executed to control the access of the first user device 104. The second access control device 108 may have a second operational range associated therewith. The second operational range may define a range where the second access control device 108 may execute transactions with user devices. Thus, when the first user device 104 is within the second operational range of the second access control device 108, the second processor 122 may be further configured to generate a second request to initiate the transaction with the first user device 104 *(e.g.,* the first user 102).

First user device 104:

The first user device 104 may be a UWB-enabled communication device such that data transmission with other UWB enabled devices *(e.g.,* the first access control device 106 and the second access control device 108) may be based on a broad frequency band and short-duration, low-energy pulses. Further, the first user device 104 may broadcast signals over a wide frequency range, generally reaching several gigahertz (GHz). Examples of the first user device 104 may include a mobile device, a smartwatch, a smart key, a smart card, or the like. The first user device 104 may include a device processor 126 and the UWB system 130. The device processor 126 and the UWB system 130 may communicate with each other by way of a third communication channel 128. Examples of the third communication channel 128 include an SPI bus, an I2C, or the like.

Device processor 126:

The device processor 126 may be a main processor of the first user device 104. The device processor 126 may include suitable circuitry that may be configured to perform one or more operations. For example, the device processor 126 may be configured to facilitate the installation of various applications (such as a transit application, a payment application, or the like). The device processor 126 may be configured to receive the setup message generated by the first UWB anchor 110 when the first user device 104 is within the first access control range of the first access control device 106. In an embodiment, the device processor 126 may be further configured to provide the setup message to the UWB system 130. The setup message may be a wakeup signal such that based on the reception of the setup message, the UWB system 130 may be configured to perform a transition of the UWB system 130 from a low power mode to a normal mode. The transition to the normal mode enables the UWB communication (*e.g.*, initiates the access control operation) between the first user device 104 and the first access control device 106. In another embodiment, the device processor 126 may be further configured to generate a set of setup signals based on the setup message and provide the set of setup signals to the UWB system 130. Examples of the device processor 126 may be a central processing unit (CPU), a graphics processing unit (GPU), a microcontroller, an application-specific integrated circuit (ASIC), or the like.

UWB system 130:

The UWB system 130 may be configured to enable the UWB communication with the first access control device 106 and the second access control device 108. The UWB system 130 may include a processing circuit 132, a memory 134, and a communication circuit 136. The processing circuit 132, the memory 134, and the communication circuit 136 may interact with each other by way of a fourth communication channel 138. Examples of the fourth communication channel 138 may include an SPI bus, an I2C, or the like.

Processing circuit 132:

The processing circuit 132 may include suitable circuitry that may be configured to perform one or more operations. For example, the processing circuit 132 may be configured to create a ranging session for the first UWB anchor 110 and the second UWB anchor 118. During a first phase of the ranging session, the processing circuit 132 may be further configured to receive the set of setup signals from the device processor 126.

Although, it is mentioned that the device processor 126 may receive the setup message from the first UWB anchor 110, in various other embodiments, the processing circuit 132 may directly receive the setup message from the first UWB anchor 110.

The first phase of the ranging session may be an initial phase of the ranging session. The processing circuit 132 may be further configured to transition from the low power mode to the normal mode based on the reception of the set of setup signals from the device processor 126. Based on the transition from the low power mode to the normal mode, the processing circuit 132 may be further configured to generate the first set of payloads. The first set of payloads may only include the first time stamp indicating the time of generation of the first set of payloads. Further, the processing circuit 132 may be configured to transmit the first set of payloads to the first UWB anchor 110.

The processing circuit 132 may be further configured to receive the first initiation message that includes the first list of elements as a response to the first set of payloads. The processing circuit 132 may be further configured to receive the first ranging message from the first UWB anchor 110. The first list of elements may be indicative of the distance between the plurality of UWB systems (*e.g.*, the UWB system 130) and the first UWB anchor 110. In an embodiment, the processing circuit 132 receives the first initiation message and the first ranging message during the first phase of the ranging session.

The processing circuit 132 may be further configured to generate the second set of payloads that may include the second time stamp indicating the time of generation of the second set of payloads. The second set of payloads may further include the first initiation message received from the first UWB anchor 110. The processing circuit 132 may be further configured to determine whether a combined size of the second time stamp and the first initiation message is within a limit of a maximum transfer unit.

The maximum transfer unit may correspond to the maximum size of a data packet that may include both payload (*e.g.,* the second time stamp and the first initiation message) and overhead (*e.g.*, additional data that may be included with the payload), that may be transmitted without fragmentation. In an embodiment, the maximum transfer unit may be based on a time period permitted to transmit both payload *(e.g.,* the second time stamp and the first initiation message) and overhead (*e.g.*, additional data that may be included with the payload). For example, when the time period permitted to transmit both the payload and the overhead is a few microseconds (ms), the maximum transfer unit may correspond to 127 bytes.

The maximum transfer unit may be determined based on a difference of Physical Layer Service Data Unit (PSDU) size and frame overhead size. In an embodiment, the size of the PSDU may be limited to 127 bytes; however, different UWB standards may have different maximum PSDU sizes. Further, the frame overhead size may be based on a combined size of a MAC header (MHR), a frame check sequence (FCS), a header information element (IE), a measurement report message (MRM) type 3 *(e.g.,* the second time stamp), a data message (DM) payload IE header *(e.g.,* a header for the first initiation message), eight octets encryption message integrity code 64 (8 octets ENC-MIC-64), and one octet auxiliary.

The frame overhead size may be represented by equation (1):

$$\text{Frame overhead size} = \text{MHR} + \text{FCS} + \text{header IE} + \text{MRM type 3} + \text{DM payload IE header} + 8 \text{ octet ENC - MIC -} 64 + 1 \text{ Octet auxilary} \quad (1)$$

Further, the maximum transfer unit may be represented by equation (2):

$$\text{Maximum transfer unit} = \text{PSDU size} - \text{Frame overhead size} \qquad (2)$$

In an embodiment, when the combined size of the second time stamp and the first initiation message is within the limit of the maximum transfer unit, the second set of payloads corresponds to a single payload *(e.g.,* a first payload) including both the second time stamp and the first initiation message. In another embodiment, when the combined size of the second time stamp and the first initiation message exceeds the limit of the maximum transfer unit, the second set of payloads may be split into a first payload and a second payload. In such an embodiment, the first payload may include the second time stamp and the second payload may include the first initiation message.

The processing circuit 132 may be further configured to detect a position of the first identifier from the arrangement of the plurality of slots of the first RML that includes the plurality of identifiers. In an embodiment, the processing circuit 132 may detect the position of the first identifier at the first slot of the first RML. The processing circuit 132 may be further configured to identify a transmission slot from the first RML to transmit the second set of payloads to the second UWB anchor 118. The transmission slot may be the first slot of the first RML that is detected based on the position of the first identifier when the combined size of the second time stamp and the first initiation message is within the limit of the maximum transfer unit. The processing circuit 132 may be further configured to transmit the second set of payloads to the second UWB anchor 118 in one of the plurality of first unique frequency channels corresponding to the first slot of the first RML.

The transmission slot may be the first slot of the first RML and one of the plurality of contention access slots of the first ranging message when the combined size of the second time stamp and the first initiation message exceeds the limit of the maximum transfer unit. The processing circuit 132 may further transmit the first payload to the second UWB anchor 118. The first payload may be transmitted in one of the plurality of first unique frequency channels corresponding to the first slot of the first RML. The processing circuit 132 may further transmit the second payload to the second UWB anchor 118. The second payload may be transmitted in one of the frequency channels corresponding to the plurality of contention access slots of the first ranging message. Further, the second set of payloads may be processed by the second UWB anchor 118 to determine the second distance between the UWB system 130 and the second UWB anchor 118 and the location of the UWB system 130 relative to the first UWB anchor 110 and the second UWB anchor 118.

The processing circuit 132 may be further configured to receive the second initiation message that includes the second list of elements as a response to the second set of payloads. The processing circuit 132 may be further configured to receive the second ranging message from the second UWB anchor 118. The second list of elements may be indicative of the distance between the plurality of UWB systems (*e.g.*, the UWB system 130) and the second UWB anchor 118. In an embodiment, the processing circuit 132 receives the second initiation message and the second ranging message during a second phase of the ranging session. In an embodiment, the second phase of the ranging session is subsequent to the first phase of the ranging session.

The processing circuit 132 may be further configured to generate the third set of payloads that may include the third time stamp indicating the time of generation of the third set of payloads. The processing circuit 132 may be further configured to determine whether a combined size of the third time stamp, the first initiation message, and the second initiation message is within the limit of the maximum transfer unit. In an embodiment, when the combined size of the third time stamp, the first initiation message, and the second initiation message is within the limit of the maximum transfer unit, the third set of payloads corresponds to a single payload (*e.g.,* a third payload) that may include the third time stamp, the first initiation message, and the second initiation message. In another embodiment, when the combined size of the second time stamp and the first initiation message exceeds the limit of the maximum transfer unit, the second set of payloads may be split into a third payload and a fourth payload. In such embodiment, the third payload may include the third time stamp and the fourth payload may include the first initiation message and the second initiation message.

The processing circuit 132 may be further configured to detect a position of the first identifier from the arrangement of the plurality of slots of the second RML that includes the plurality of identifiers. In an embodiment, the processing circuit 132 may detect the position of the first identifier at the first slot of the second RML. The processing circuit 132 may be further configured to identify a transmission slot from the second RML to transmit the third set of payloads to the first UWB anchor 110. The transmission slot may be the first slot of the second RML that is detected based on the position of the first identifier when the combined size of the second time stamp and the first initiation message is within the limit of the maximum transfer unit. The processing circuit 132 may be further configured to transmit the third set of payloads to the first UWB anchor 110. The third payload may be transmitted in one of the frequency channels corresponding to the plurality of contention access slots of the second ranging message. In an embodiment, the processing circuit 132 may be further configured to initiate authentication with the second UWB anchor 118 based on the first priority value assigned by the second UWB anchor 118. The authentication may be initiated for the access control operation with the second UWB anchor 118.

The transmission slot may be the first slot of the second RML and one of the plurality of contention access slots of the second ranging message when the combined size of the third time stamp, the first initiation message, and the second initiation message exceeds the limit of the maximum transfer unit. The processing circuit 132 may be further configured to transmit the third payload to the first UWB anchor 110. The third payload may be transmitted in one of the plurality of third unique frequency channels corresponding to the first slot of the second RML. The processing circuit 132 may be further configured to transmit the fourth payload to the first UWB anchor 110. The fourth payload may be transmitted in one of the plurality of fourth unique frequency channels of the second RML. Further, the third set of payloads may be processed by the first UWB anchor 110 to determine the third distance (*e.g.*, the updated first distance) between the UWB system 130 and the first UWB anchor 110 and the location of the UWB system 130 relative to the first UWB anchor 110 and the second UWB anchor 118.

In an embodiment, the first UWB anchor 110 may assign the second priority value to the first user device 104 upon determination of the location of the UWB system 130. The processing circuit 132 may be further configured to initiate authentication with the first UWB anchor 110 based on the second priority value assigned by the first UWB anchor 110. The authentication may be initiated for the access control operation with the first UWB anchor 110.

Communication circuit 136:

The communication circuit 136 of the UWB system 130 may be configured to transmit and receive messages between the UWB anchors (*e.g.*, the first UWB anchor 110 and the second UWB anchor 118) and the processing circuit 132. Examples of the messages may include the plurality of authentication responses, the plurality of authentication requests, or the like. Examples of the communication circuit 136 may include a transmitter, a receiver, a transceiver, an antenna, or the like.

Memory 134:

The memory 134 may be configured to store the ranging payload set received by the processing circuit 132. The memory 134 may be configured to erase the second session key of the ranging payload set based on the reception of the transaction signal from the first access control device 106. Examples of the memory 134 may include a flash memory, solid-state drives (SSD), a non-volatile random-access memory (NVRAM), a magnetoresistive random-access memory (MRAM), a phase change memory (PCM), a battery-backed static random-access memory (SRAM), a resistive random-access memory (ReRAM), or the like.

In operation:

In a non-limiting example scenario, the UWB environment 100 is assumed to be a metro transit environment. In such an environment, the first user 102 approaches fare collection terminals at a metro station. The fare collection terminals may be the first access control device 106 and the second access control device 108. Further, the access control operation may be performed to facilitate an entry to a metro platform at the metro station. The first UWB anchor 110 may generate the setup message to enable communication with the first user device 104 when the first user device 104 is detected to be within the first access control range *(e.g.,* 50 m$^2$) of the first UWB anchor 110. Further, the first UWB anchor 110 may transmit the setup message to the first user device 104. The processing circuit 132 may receive the setup message from the first UWB anchor 110. The processing circuit 132 may transition from the low power mode to the normal mode based on the reception of the setup message. Upon transitioning to the normal mode, UWB communication between the first access control device 106 and the first user device 104 may be established. The processing circuit 132 may generate the first set of payloads that may include the first time stamp indicating the time of generation of the first set of payloads. Further, the processing circuit 132 may transmit the first set of payloads to the first UWB anchor 110 for CBR. Based on the first time stamp, the first UWB anchor 110 may determine the first distance between the UWB system *130* (*e.g.,* the first user device 104) and the first UWB anchor 110. Further, the first UWB anchor 110 may generate and transmit the first initiation message and the first ranging message. The first initiation message and the first ranging message may be received by the processing circuit 132. Upon receiving the first initiation message and the first ranging message, the processing circuit 132 may generate the second set of payloads that may include the second time stamp and the received first initiation message.

The processing circuit 132 may transmit the second set of payloads to the second UWB anchor 118. In other words, the processing circuit 132 may relay the received first initiation message to the second UWB anchor 118 by means of in-band communication channels. The second UWB anchor 118 may determine the second distance between the UWB system 130 and the second UWB anchor 118 based on the second time stamp. Further, the second UWB anchor 118 may determine the first distance based on the first initiation message. Additionally, the second UWB anchor 118 may include information related to the gate distance and may further determine the location of the UWB system 130 based on the first distance, the second distance, and the gate distance.

The second UWB anchor 118 may further assign the first priority value to the UWB system 130 by positioning the first identifier associated with the UWB system 130 at the first slot of the second RML. The first identifier may be positioned based on the proximity of the UWB system 130 among the plurality of UWB systems. Additionally, the UWB system 130 may initiate the authentication for the access control operation with the second UWB anchor 118 based on the first priority value. The first UWB anchor 110 may further configured to generate a third ranging message including a third RML. The third RML may include the plurality of identifiers associated with the plurality of UWB systems. The first UWB anchor 110 may be further configured to assign the second priority value to the UWB system 130 by positioning the first identifier associated with the UWB system 130 at the first slot of the third RML. The first identifier may be positioned based on the proximity of the UWB system 130 among the plurality of UWB systems. Additionally, the UWB system 130 may initiate the authentication for the access control operation with the first UWB anchor 110 based on the second priority value.

FIGS. 2A-2B are diagrams that illustrate an example of a transit scenario 200 where the access control devices (*e.g.,* the first access control device 106 and the second access control device 108) may determine the location of each of the user devices (*e.g.,* the first user device 104 and the second user device, hereinafter referred to as a "second user device 204"), in accordance with an embodiment of the present disclosure.

For the sake of brevity, the transit scenario 200 is shown to include the first user device 104 and the second user device 204. However, in various other embodiments, the transit scenario 200 may include user devices in addition to the first user device 104 and the second user device 204.

Referring now to FIG. 2A, the transit scenario 200 may include the first user 102, the first user device 104, a second user 202, and the second user device 204. In an embodiment, the second user device 204 is functionally similar to the first user device 104. The transit scenario 200 may further include the first access control device 106 and the second access control device 108. Each of the first user device 104 and the second user device 204 may be within the first access control range of the first access control device 106 and the second access control range of the second access control device 108. The first user device 104 and the second user device 204 may generate a first payload S1 *(e.g.,* the first set of payloads) and a second payload S2, respectively. Further, the first user device 104 and the second user device 204 may transmit the first payload S1 and the second payload S2, respectively, to the first access control device 106. Based on the first payload S1, the first user device 104 may receive a first response R1 from the first access control device *106 (e.g.,* the first UWB anchor 110). Additionally, based on the second payload S2, the second user device 204 may receive the first response R1 from the first access control device 106. Upon receiving the first response R1, the first user device 104 and the second user device 204 may generate a third payload S3 and a fourth payload S4, respectively. Further, the first user device 104 and the second user device 204 may transmit a third payload S3 and a fourth payload S4, respectively, to the second access control device 108. Based on the third payload S3, the first user device 104 may receive a second response R2 from the second access control device 108 *(e.g.,* the second UWB anchor 118). Additionally, based on the fourth payload S4, the second user device 204 may receive the second response R2 from the second access control device 108.

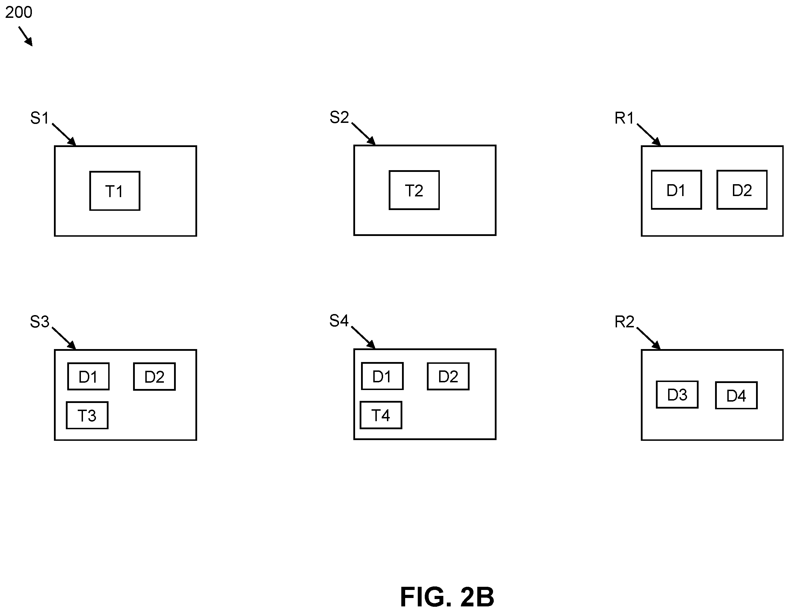

Referring now to FIG. 2B, the transit scenario 200 may further include the first payload S1, the second payload S2, the third payload S3, the fourth payload S4, the first response R1, and the second response R2.

The first payload S1 may include a fourth time stamp T1 *(e.g.,* the first time stamp) and the second payload S2 may include a fifth time stamp T2. In an embodiment, the fourth time stamp T1 and the fifth time stamp T2 correspond to the time stamps indicating a time of generation of the first payload S1 and the second payload S2, respectively. Further, based on the fourth time stamp T1 and the fifth time stamp T2, the first access control device 106 may generate the first response R1. The first response R1 may include a first distance parameter D1 and a second distance parameter D2 *(e.g.,* the first initiation message that includes the first list of elements). The first distance parameter D1 may correspond to a distance between the first user device 104 and the first UWB anchor 110. Additionally, the second distance parameter D2 may correspond to a distance between the second user device 204 and the first UWB anchor 110.

For the sake of brevity, the first response R1 and the second response R2 of the transit scenario 200 are only shown to include the first distance parameter D1 and a second distance parameter D2 *(e.g.,* the first initiation message). However, in various other embodiments, the first response R1 and the second response R2 of the transit scenario 200 may include the first ranging message that may include the first RML.

The first user device 104 may generate the third payload S3. The third payload S3 may include a sixth time stamp T3 *(e.g.,* the second time stamp), the first distance parameter D1, and the second distance parameter D2. Additionally, the second user device 204 may generate the fourth payload S4. The fourth payload S4 may include a seventh time stamp T4, the first distance parameter D1, and the second distance parameter D2. In an embodiment, the sixth time stamp T3 and the seventh time stamp T4 may correspond to the time stamps indicating a time of generation of the third payload S3 and the fourth payload S4, respectively. Further, the first user device 104 and the second user device 204 may transmit the third payload S3 and the fourth payload S4, respectively, to the second access control device 108.

The second access control device 108 may determine the third distance parameter D3 based on the sixth time stamp T3. The second access control device 108 may store information related to the gate distance (e.g., the distance between the first access control device 106 and the second access control device 108). Further, the second access control device 108 may determine the location of the first user device 104 based on the first distance parameter D1, the third distance parameter D3, and the gate distance.

The second access control device 108 may determine the fourth distance parameter D4 based on the seventh time stamp T4. Further, the second access control device 108 may determine the location of the second user device 204 based on the second distance parameter D2, the fourth distance parameter D4, and the gate distance. In an example, the distance between the first user device 104 and the second access control device 108 exceeds the distance between the second user device 204 and the second access control device 108. Further, the second access control device 108 may assign a priority value P1 to the second user device 204 based on the location of the second user device 204. The second access control device 108 may further assign a priority value P2 to the first user device 104 based on the location of the first user device 104. The priority value P1 may indicate a higher priority as compared to the priority value P2 considering that the second user device 204 is nearer to the second access control device 108 as compared to the first user device 104.

The second access control device 108 may further generate the second response R2 based on the location of the first user device 104 and the second user device 204. The second response R2 may include a third distance parameter D3 and a fourth distance parameter D4 *(e.g.,* the second initiation message that includes the second list of elements). Additionally, the second user device 204 may initiate authentication for the access control operation with the second access control device 108 based on the priority value P1 assigned by the second access control device 108. Further, the first user device 104 may initiate authentication for the access control operation with the second access control device 108 based on the priority value P2 assigned by the second access control device 108. In a scenario, the second user 202 *(e.g.,* the second user device 204) may proceed towards the second access control device 108 based on the distance (e.g., closer proximity) of the second access control device 108. Further, the second access control device 108 may await initiation of transaction with the first user device 104 due to the higher priority value (e.g. the priority value P1) assigned to the second user device 204 as compared to the first user device 104. The second access control device 108 may initiate the transaction with the second user device 204 when the second user device 204 is within a transaction range (e.g., 1.5 meters) of the second access control device 108. Examples of the transaction may include fare deduction, credit redemption, or the like.

The first user device 104 may generate a fifth payload based on the second response R2 received from the second access control device 108. The fifth payload may include an eighth time stamp, the third distance parameter D3, and the fourth distance parameter D4. Additionally, the second user device 204 may generate a sixth payload based on the second response R2 received from the second access control device 108. The sixth payload may include a ninth time stamp, the third distance parameter D3, and the fourth distance parameter D4. In an embodiment, the eighth time stamp and the ninth time stamp correspond to the time stamps indicating a time of generation of the fifth payload and the sixth payload, respectively. Further, the first user device 104 and the second user device 204 may transmit the fifth payload and the sixth payload, respectively, to the first access control device 106.

The first access control device 106 may determine a fifth distance parameter based on the eighth time stamp. The first access control device 106 may store information related to the gate distance (e.g., the distance between the first access control device 106 and the second access control device 108). Further, the first access control device 106 may determine the location of the first user device 104 based on the third distance parameter D3, the fifth distance parameter, and the gate distance.

The first access control device 106 may determine a sixth distance parameter based on the ninth time stamp. Further, the first access control device 106 may determine the location of the second user device 204 based on the fourth distance parameter D4, the sixth distance parameter, and the gate distance. In an example, the distance between the second user device 204 and the first access control device 106 exceeds the distance between the first user device 104 and the first access control device 106. Further, the first access control device 106 may assign a priority value P3 to the first user device 104 based on the location of the first user device 104. The first access control device 106 may further assign a priority value P4 to the second user device 204 based on the location of the second user device 204. The priority value P3 may indicate a higher priority as compared to the priority value P4.

The first access control device 106 may further generate a third response based on the location of the first user device 104 and the second user device 204. The third response may include the fifth distance parameter and the sixth distance parameter. Additionally, the first user device 104 may initiate authentication for the access control operation with the first access control device 106 based on the priority value P3 assigned by the first access control device 106. Further, the second user device 204 may initiate authentication for the access control operation with the first access control device 106 based on the priority value P4 assigned by the first access control device 106. In a scenario, the first user 102 (e.g., the first user device 104) may proceed towards the first access control device 106 based on the distance (e.g., closer proximity) of the first access control device 106. Further, the first access control device 106 may await initiation of transaction with the second user device 204 due to the higher priority value (e.g. the priority value P3) assigned to the first user device 104 as compared to the second user device 204. The first access control device 106 may initiate the transaction with the first user device 104 when the first user device 104 is within a transaction range (e.g., 1.5 meters) of the first access control device 106. Examples of the transaction may include fare deduction, credit redemption, or the like. In another embodiment, the transaction between the second user device 204 and the second access control device 108 may be successful before the assignment of the priority value P4 to the second user device 204 by the first access control device 106. In such an embodiment, the first access control device 106 may receive an indication of the successful transaction of the second user device 204 with the second access control device 108 and may refrain from assigning any priority value to the second user device 204. In yet another embodiment, the transaction between the second user device 204 and the second access control device 108 may be successful after the assignment of the priority value P4 to the second user device 204 by the first access control device 106. In such an embodiment, the first access control device 106 may receive an indication of the successful transaction with the second access control device 108 and may delete the priority value P4 assigned to the second user device 204 from the second response R2.

The first access control device 106 and the second access control device 108 may assign different priority values to each of the first user device 104 and the second user device 204 upon detecting a change in respective positions. In other words, priority assignment may be dynamically changed upon detecting changes in device positions. In an embodiment, the first access control device 106 may update priority values such that the first user device 104 is assigned the priority value P4 and the second user device 204 is assigned the priority value P3 indicating a higher priority. The priority values may be updated upon detecting that the distance between the first user device 104 and the first access control device 106 exceeds the distance between the second user device 204 and the first access control device 106. Further, the first user device 104 and the second user device 204 may initiate authentication for the access control operation with the first access control device 106 based on the updated priority values.

In another embodiment, the second access control device 108 may update priority values such that the first user device 104 is assigned the priority value P1 and the second user device 204 is assigned the priority value P2. The priority values may be updated upon detecting that the distance between the second user device 204 and the second access control device 108 exceeds the distance between the first user device 104 and the second access control device 108. Further, the first user device 104 and the second user device 204 may initiate authentication for the access control operation with the second access control device 108 based on the updated priority values.

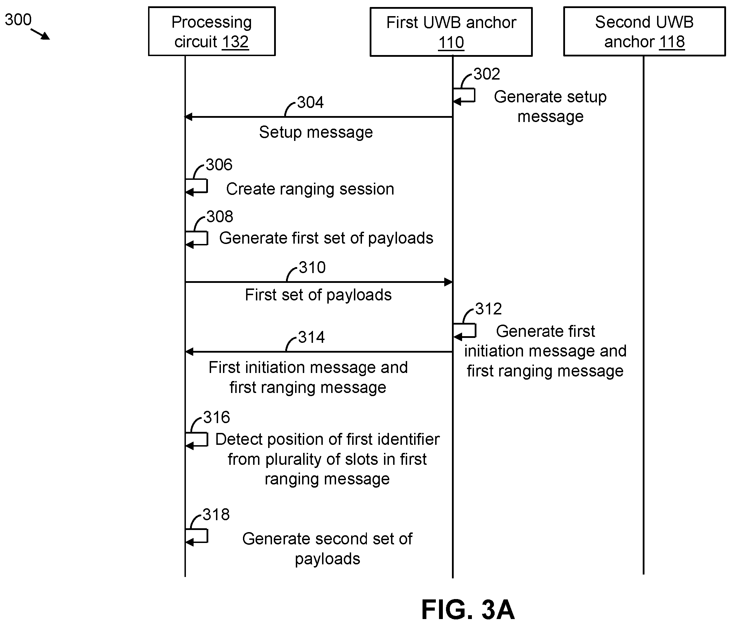

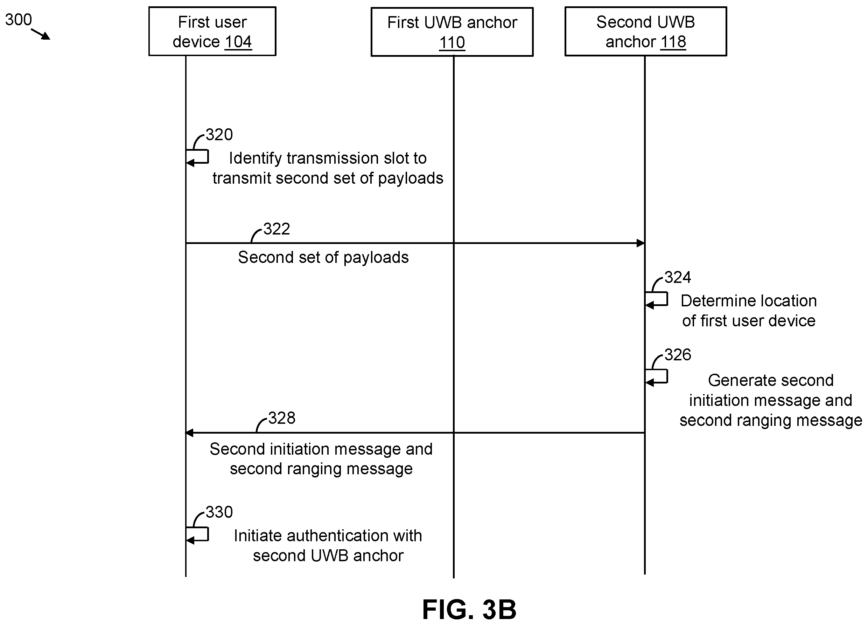

FIGS. 3A-3B, collectively, represent a process flow diagram 300 that illustrates multi-lateration of the first user device 104, in accordance with an embodiment of the present disclosure.

The first UWB anchor 110 may generate the setup message when the first user device 104 is detected within the first access control range of the first UWB anchor 110 (as shown by arrow 302). The first UWB anchor 110 may further transmit the setup message to the processing circuit 132 (as shown by arrow 304). Further, the processing circuit 132 may create the ranging session for the first UWB anchor 110 and the second UWB anchor 118 (as shown by arrow 306). The processing circuit 132 may generate the first set of payloads that include the first time stamp (as shown by arrow 308). The processing circuit 132 may further transmit the first set of payloads to the first UWB anchor 110 (as shown by arrow 310). Based on the received first set of payloads, the first UWB anchor 110 may generate the first initiation message and the first ranging message (as shown by arrow 312). The first initiation message may be indicative of the first distance between the first user device 104 (*e.g.,* the first user device 104 that includes the processing circuit 132) and the first UWB anchor 110. The processing circuit 132 may receive the first initiation message and the first ranging message from the first UWB anchor 110 (as shown by arrow 314). Upon receiving the first initiation message and the first ranging message, the processing circuit 132 may detect the position of the first identifier associated with the UWB system 130 from the plurality of slots in the first RML of the first ranging message (as shown by arrow 316). The processing circuit 132 may further generate the second set of payloads that may include the second time stamp indicating the time of generation of the second set of payloads (as shown by arrow 318). The second set of payloads may further include the first initiation message received from the first UWB anchor 110.

The processing circuit 132 may identify the transmission slot (*e.g.,* the first slot of the first RML) to transmit the second set of payloads to the second UWB anchor 118 (as shown by arrow 320). Further, the processing circuit 132 may transmit the second set of payloads to the second UWB anchor 118 (as shown by arrow 322). Based on the second set of payloads, the second UWB anchor 118 may determine the location of the UWB system 130 relative to the first UWB anchor 110 and the second UWB anchor 118 (as shown by arrow 324). The second UWB anchor 118 may further assign the first priority value to the UWB system 130 by positioning the first identifier associated with the UWB system 130 at the first slot of the second RML. The first identifier may be positioned based on the proximity of the UWB system 130 among the plurality of UWB systems. Further, the second UWB anchor 118 may generate the second initiation message and the second ranging message (as shown by arrow 326). The processing circuit 132 may further receive the second initiation message and the second ranging message from the second UWB anchor 118 (as shown by arrow 328). Additionally, the processing circuit 132 may initiate the authentication for the access control operation with the second UWB anchor 118 based on the first priority value (as shown by arrow 330).

The processing circuit 132 may further generate the third set of payloads such that the first UWB anchor 110 may determine the location of the UWB system 130 relative to the first UWB anchor 110 and the second UWB anchor 118. Upon receiving the third set of payloads, the first UWB anchor 110 may further assign the second priority value to the UWB system 130. The first UWB anchor 110 may position the first identifier associated with the UWB system 130 by positioning the first identifier associated with the UWB system 130 at the first slot of the third RML. The first identifier may be positioned based on the proximity of the UWB system 130 among the plurality of UWB systems. Additionally, the processing circuit 132 may initiate the authentication for the access control operation with the first UWB anchor 110 based on the second priority value.

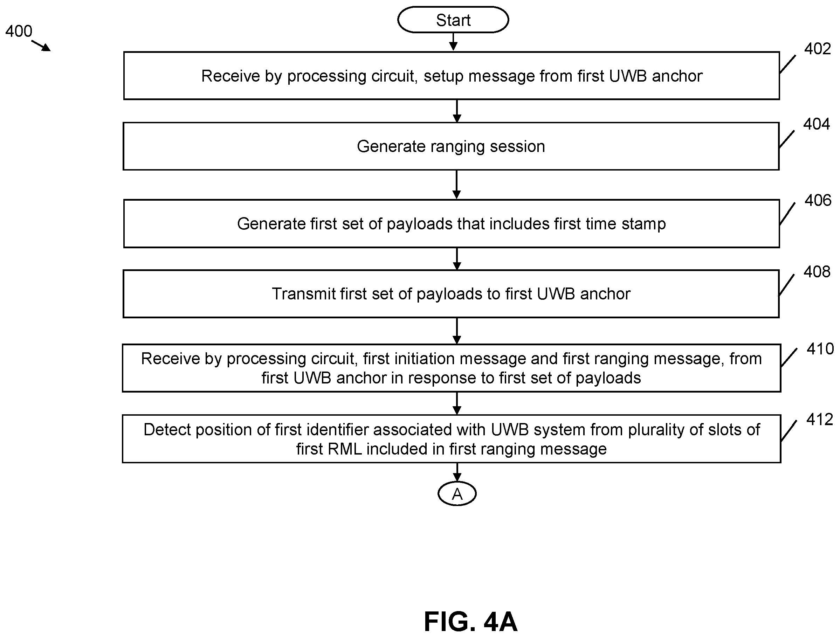

FIGS. 4A-4C, collectively, represent a flowchart 400 that illustrates a method to relay messages for multi-lateration of the user device (*e.g.,* the first user device 104) by the access control devices (*e.g.,* the first access control device 106 and the second access control device 108), in accordance with an embodiment of the present disclosure.

Referring now to FIG. 4A, at step 402, the processing circuit 132 may receive the setup message from the first UWB anchor 110. The setup message may be generated by the first UWB anchor 110 when the first user device 104 is detected within the first access control range of the first UWB anchor 110. Further, the setup message may be transmitted by the first UWB anchor 110 to the processing circuit 132 of the UWB system 130. At step 404, the processing circuit 132 may generate the ranging session for the first UWB anchor 110 and the second UWB anchor 118. At step 406, the processing circuit 132 may generate the first set of payloads that may include the first time stamp. At step 408, the processing circuit 132 may transmit the first set of payloads to the first UWB anchor 110. The first UWB anchor 110 may receive the first set of payloads. Further, the first UWB anchor 110 may determine the first distance between the UWB system 130 that includes the processing circuit 132 (*e.g.,* the first user device 104) and the first UWB anchor 110 based on the first time stamp. The first UWB anchor 110 may further generate the first initiation message indicating the first distance, and the first ranging message and transmit the first initiation message and the first ranging message to the processing circuit 132. At step 410, the processing circuit 132 may receive the first initiation message and the first ranging message from the first UWB anchor 110 in response to first set of payloads. The first initiation message may indicate the first distance between the UWB system 130 and the first UWB anchor 110. At step 412, the processing circuit 132 may detect the position of the first identifier associated with the UWB system 130 from the plurality of slots of the first RML included in the first ranging message

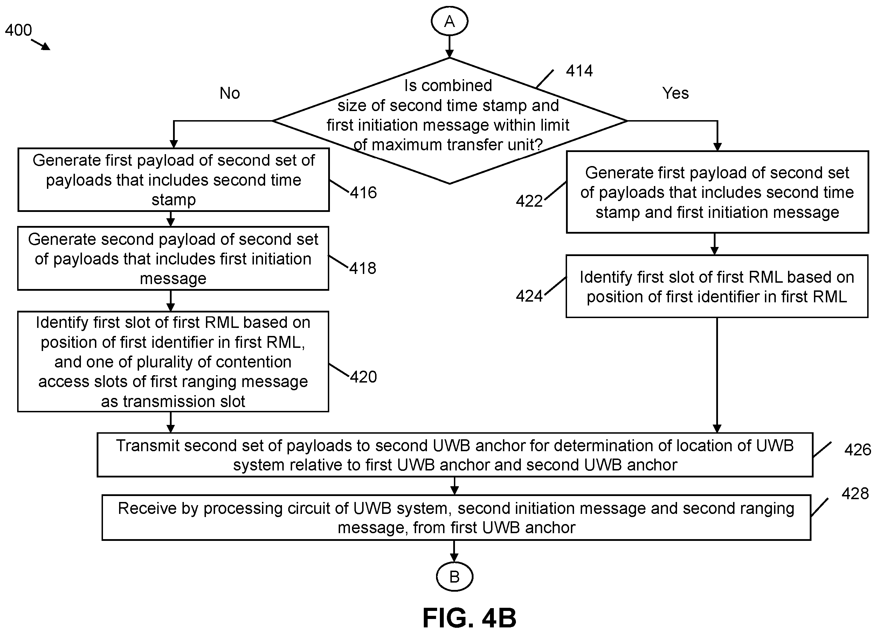

Referring now to FIG. 4B, at step 414, the processing circuit 132 may determine whether the combined size of the second time stamp and the first initiation message is within the limit of the maximum transfer unit. If at step 414, it is determined that the combined size of the second time stamp and the first initiation message exceeds the limit of the maximum transfer unit, step 416 is performed. At step 416, the processing circuit 132 may generate the first payload of the second set of payloads. The first payload may include the second time stamp. At step 418, the processing circuit 132 may generate the second payload of the second set of payloads. The second payload may include the first initiation message. At step 420, the processing circuit 132 may identify the first slot of the first RML based on the position of the first identifier in the first RML, and one of the plurality of contention access slots of the first ranging message as the transmission slot. If at step 414, it is determined that the combined size of the second time stamp and the first initiation message is within the limit of the maximum transfer unit, step 422 is performed. At step 422, the processing circuit 132 may generate the first payload of the second set of payloads that may include the second time stamp and the first initiation message. At step 424, the processing circuit 132 may identify the first slot of the first RML based on the position of the first identifier in the first RML.

At step 426, the processing circuit 132 may transmit the second set of payloads to the second UWB anchor 118 for determination of the location of the UWB system 130 relative to the first UWB anchor 110 and the second UWB anchor 118. The second UWB anchor 118 may receive the second set of payloads from the processing circuit 132. Further, the second UWB anchor 118 may determine the second distance between the UWB system 130 that includes the processing circuit 132 (*e.g.,* the first user device 104) and the second UWB anchor 118. The second distance may be determined based on the second time stamp. Further, the location of the UWB system 130 may be determined based on the first distance, the second distance, and the gate distance (*e.g.*, the distance between the first access control device 106 and the second access control device 108).

The second UWB anchor 118 may further generate the second initiation message indicating the second distance, and the second ranging message. The second initiation message may be indicative of the second distance. Further, the second UWB anchor 118 may transmit the second initiation message and the second ranging message to the processing circuit 132. At step 428, the processing circuit 132 of the UWB system 130 may receive the second initiation message and the second ranging message from the first UWB anchor 110.

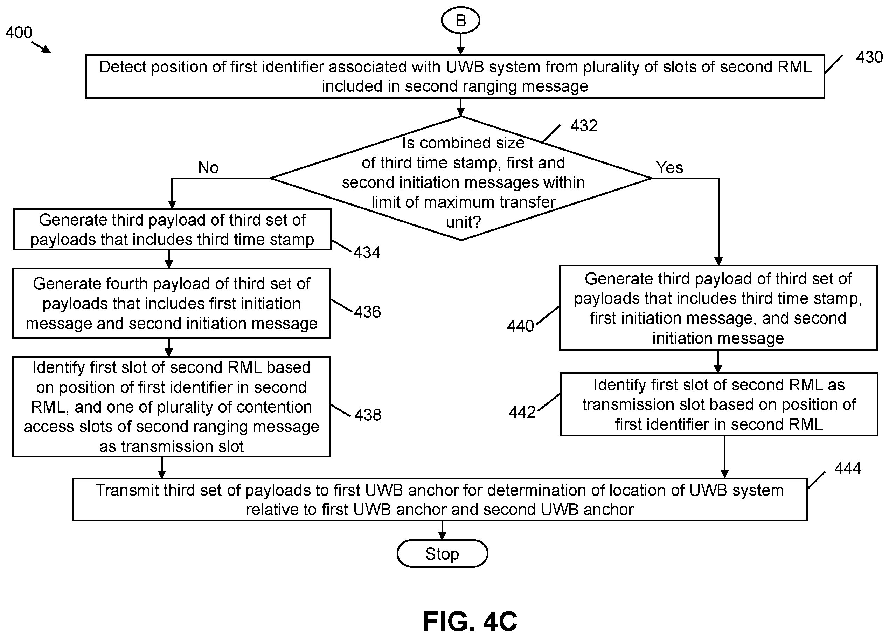

Referring now to FIG. 4C at step 430, the processing circuit 132 may detect the position of the first identifier associated with the UWB system 130 from the plurality of slots of the second RML included in the second ranging message. At step 432, the processing circuit 132 may determine whether the combined size of the third time stamp, the first initiation message, and the second initiation message is within the limit of the maximum transfer unit. If at step 432, it is determined that the combined size of the third time stamp, the first initiation message, and the second initiation message exceeds the limit of the maximum transfer unit, step 434 is performed. At step 434, the processing circuit 132 may generate the third payload of the third set of payloads that may include the third time stamp. At step 436, the processing circuit 132 may generate the fourth payload of the third set of payloads that may include the first initiation message and the second initiation message. At step 438, the processing circuit 132 may identify the first slot of the second RML based on the position of the first identifier in the second RML, and one of the plurality of contention access slots of the second ranging message as the transmission slot. The first slot may be identified based on the position of the first identifier. If at step 432, it is determined that the combined size of the third time stamp, the first initiation message, and the second initiation message is within the limit of the maximum transfer unit, step 440 is performed.

At step 440, the processing circuit 132 may generate the third payload of the third set of payloads that may include the third time stamp, the first initiation message, and the second initiation message. At step 442, the processing circuit 132 may identify the first slot of the second RML as the transmission slot based on the position of the first identifier in the second RML. At step 444, the processing circuit 132 may transmit the third set of payloads to the first UWB anchor 110 for determination of the location of UWB system 130 relative to the first UWB anchor 110 and the second UWB anchor 118. The first UWB anchor 110 may receive the third set of payloads from the processing circuit 132. Further, the first UWB anchor 110 may determine the third distance between the UWB system 130 and the first UWB anchor 110 and the location of the UWB system 130. In an embodiment, the third distance may correspond to the updated first distance as the first user device 104 moves. The third distance may be determined based on the third time stamp. The location of the UWB system 130 may be determined based on the second distance, the third distance, and the gate distance (*e.g.*, the distance between the first access control device 106 and the second access control device 108).

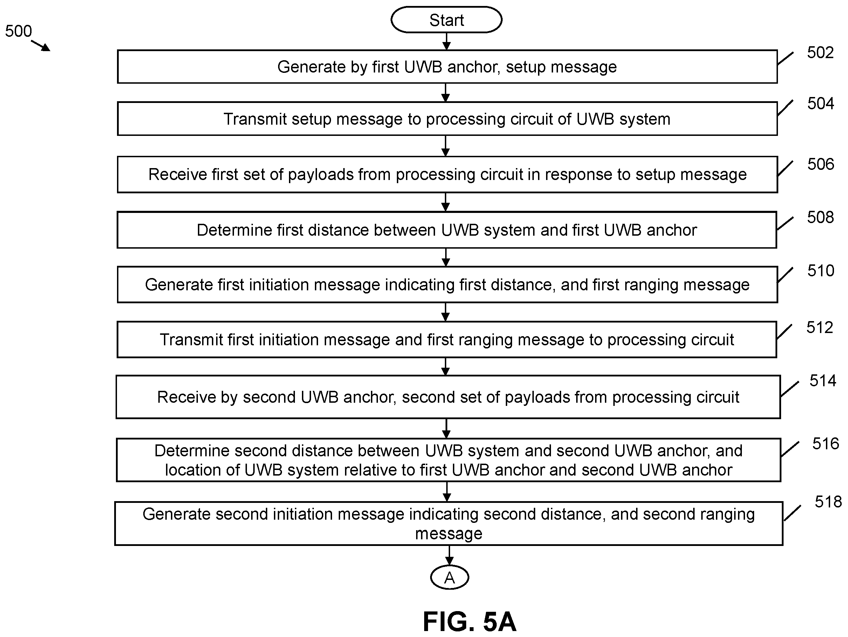

FIGS. 5A-5B, collectively, represent a flowchart 500 that illustrates a multi-lateration method executed by the access control devices (*e.g.,* the first access control device 106 and the second access control device 108), in accordance with an embodiment of the present disclosure.

Referring now to FIG. 5A, at step 502, the first UWB anchor 110 may generate the setup message when the first user device 104 is detected to be within the first access control range of the first UWB anchor 110. At step 504, the first UWB anchor 110 may transmit the setup message to the processing circuit 132 of the UWB system 130. The processing circuit 132 may receive the setup message from the first UWB anchor 110. Based on the setup message the processing circuit 132 may generate the ranging session for the first UWB anchor 110 and the second UWB anchor 118. Further, the processing circuit 132 may generate the first set of payloads that may include the first time stamp. The processing circuit 132 may further transmit the first set of payloads to the first UWB anchor 110. At step 506, the first UWB anchor 110 may receive the first set of payloads from the processing circuit 132 in response to the setup message. At step 508, the first UWB anchor 110 may determine the first distance between the UWB system 130 that includes the processing circuit 132 (e.g., the first user device 104) and the first UWB anchor 110 based on the first time stamp. At step 510, the first UWB anchor 110 may generate the first initiation message indicating the first distance, and the first ranging message. At step 512, the first UWB anchor 110 may transmit the first initiation message and the first ranging message to the processing circuit 132. The processing circuit 132 may receive the first initiation message and the first ranging message from the first UWB anchor 110 in response to the first set of payloads. The first initiation message may indicate the first distance between the UWB system 130 and the first UWB anchor 110. The processing circuit 132 may further detect the position of the first identifier associated with the UWB system 130 from the plurality of slots of the first RML included in the first ranging message. Further, the processing circuit 132 may identify the first slot of the first RML, and one of the plurality of contention access slots of the first ranging message as the transmission slot. The identification may be based on the determination that the combined size of the second time stamp and the first initiation message exceeds the limit of the maximum transfer unit. Alternatively, the processing circuit 132 may identify the first slot of the first RML as the transmission slot. The identification may be based on the determination that the combined size of the second time stamp and the first initiation message is within the limit of the maximum transfer unit.

The processing circuit 132 may transmit the second set of payloads to the second UWB anchor 118. At step 514, the second UWB anchor 118 may receive the second set of payloads from the processing circuit 132. At step 516, the second UWB anchor 118 may determine the second distance between the UWB system 130 and the second UWB anchor 118, and the location of the UWB system 130 relative to the first UWB anchor 110 and the second UWB anchor 118. At step 518, the second UWB anchor 118 may generate the second initiation message indicating the second distance, and the second ranging message.

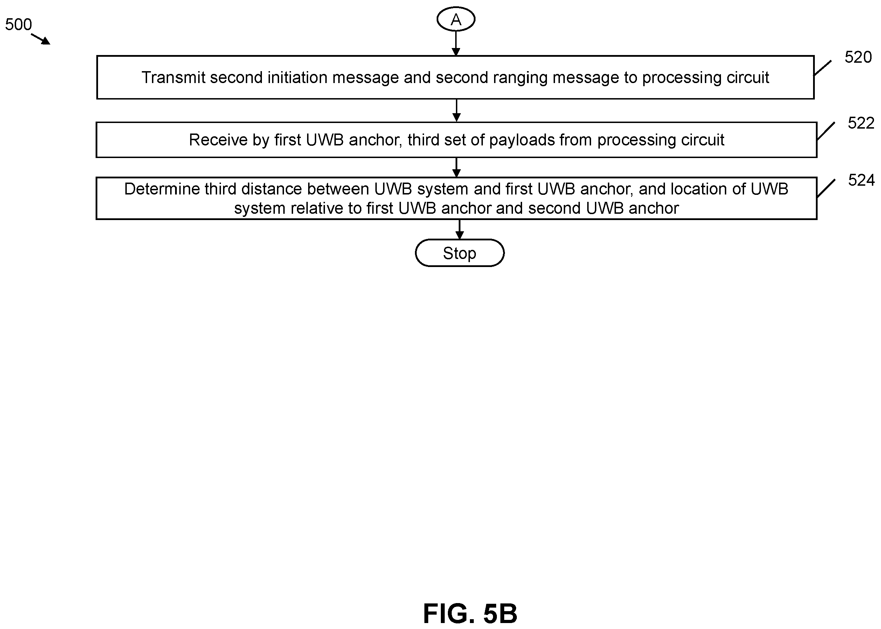

Referring now to FIG. 5B, at step 520, the second UWB anchor 118 may transmit the second initiation message and the second ranging message to the processing circuit 132. The processing circuit 132 may receive the second initiation message and the second ranging message from the second UWB anchor 118 in response to the second set of payloads. The second initiation message may indicate the second distance between the UWB system 130 and the second UWB anchor 118. The processing circuit 132 may further detect the position of the first identifier associated with the UWB system 130 from the plurality of slots of the second RML included in the second ranging message. Further, the processing circuit 132 may identify the first slot of the second RML, and one of the plurality of contention access slots of the first ranging message as the transmission slot. The identification may be based on the determination that the combined size of the third time stamp, the first initiation message, and the second initiation message exceeds the limit of the maximum transfer unit. Alternatively, the processing circuit 132 may identify the first slot of the second RML as the transmission slot. The identification may be based on the determination that the combined size of the third time stamp, the first initiation message, and the second initiation message is within the limit of the maximum transfer unit.

The processing circuit 132 may further transmit the third set of payloads to the first UWB anchor 110. At step, 522, the first UWB anchor 110 may receive the third set of payloads from the processing circuit 132. At step 524, the first UWB anchor 110 may determine the third distance between the UWB system 130 and the second UWB anchor 118, and the location of the UWB system 130 relative to the first UWB anchor 110 and the second UWB anchor 118.

The communication between the processing circuit 132 and each of the first UWB anchor 110 and the second UWB anchor 118 may be based on in-band communication channels. Conventional methods may implement out-of-band communication channels that require additional hardware components as compared to in-band communication channels thereby leading to a higher set-up cost to implement such out-of-band communication channels. As the UWB environment 100 implements in-band communication channels, a set-up cost to implement the UWB environment 100 is reduced. In addition, multi-lateration of the first user device 104 via in-band communication channels consumes less time due to lower operational overheads as compared to multi-lateration of user devices via out-of-band communication channels. Due to directional nature of the first UWB anchor 110 and the second UWB anchor 118, each of the first UWB anchor 110 and the second UWB anchor 118 radiates maximum energy towards the processing circuit 132 (e.g., the first user device 104). Thus, the energy radiated between each of the first UWB anchor 110 and the second UWB anchor 118 is restricted, thereby limiting a communication range between the first UWB anchor 110 and the second UWB anchor 118. As the communication range is limited, the processing circuit 132 that receives the maximum energy radiation relays the first initiation message and the second initiation message between the first UWB anchor 110 and the second UWB anchor 118. Thus, lower signal degradation (e.g., degradation of messages and payloads communicated to the first UWB anchor 110 and the second UWB anchor 118) is achieved by the UWB environment 100 thereby improving range and scalability for multi-lateration of the first user device 104 over the conventional methods.

In an embodiment, an ultra-wideband (UWB) system may comprise a processing circuit. The processing circuit may be configured to receive from a first UWB anchor, a first initiation message indicating a first distance between the UWB system and the first UWB anchor. The processing circuit may be further configured to generate a first set of payloads that may comprise (i) a first time stamp indicating a time of generation of the first set of payloads and (ii) the first initiation message. The processing circuit may be further configured to transmit the first set of payloads to a second UWB anchor, wherein the first set of payloads may be processed to determine (i) a second distance between the UWB system and the second UWB anchor and (ii) a location of the UWB system relative to the first UWB anchor and the second UWB anchor.

In some embodiments, the processing circuit may be further configured to receive upon transmitting the first set of payloads, a second initiation message indicating the second distance from the second UWB anchor. Further, the processing circuit may be configured to generate a second set of payloads that may comprise (i) a second time stamp indicating a time of generation of the second set of payloads and (ii) the first initiation message and the second initiation message. The processing circuit may be further configured to transmit the second set of payloads to the first UWB anchor, wherein the second set of payloads may be processed to determine (i) a third distance between the UWB system and the first UWB anchor and (ii) the location of the UWB system.

In some embodiments, each of the first UWB anchor and the second UWB anchor may be preconfigured with a fourth distance between the first UWB anchor and the second UWB anchor, and wherein each of the first UWB anchor and the second UWB anchor may further determine the location of the UWB system based on the fourth distance.

In some embodiments, based on the location of the UWB system, the first UWB anchor may assign a first priority value to the UWB system, and the second UWB anchor may assign a second priority value to the UWB system, wherein the processing circuit may be further configured to initiate authentication with the first UWB anchor based on the first priority value, and the second UWB anchor based on the second priority value.

In some embodiments, the processing circuit may be further configured to receive a setup message from at least one of the first UWB anchor and the second UWB anchor. The processing circuit may be further configured to create a ranging session for the first UWB anchor and the second UWB anchor, wherein the processing circuit may receive the first initiation message from the first UWB anchor during a first phase of the ranging session, and the processing circuit may receive a second initiation message from the second UWB anchor during a second phase of the ranging session.

In some embodiments, the processing circuit may be further configured to receive a first ranging message, wherein the first ranging message may include a ranging management list (RML), and wherein the RML may include a plurality of slots associated with a plurality of UWB systems that may be within an access control range of the first UWB anchor such that the plurality of slots may be (i) indicative of proximity of the plurality of UWB systems to the first UWB anchor, and (ii) correspond to a plurality of first unique frequency channels, and wherein the UWB system is included in the plurality of UWB systems.

In some embodiments, the plurality of slots may comprise a plurality of identifiers associated with the plurality of UWB systems, wherein the plurality of UWB systems may comprise the UWB system, the plurality of slots may comprise a first slot, and the plurality of identifiers may comprise a first identifier, and wherein the first slot may comprise the first identifier associated with the UWB system.

In some embodiments, the first ranging message may further include a plurality of contention access slots, and wherein the plurality of contention access slots may correspond to frequency channels that are different from the plurality of first unique frequency channels.

In some embodiments, the processing circuit may be further configured to detect a position of the first identifier from the plurality of slots, wherein the processing circuit may detect the position of the first identifier at the first slot. The processing circuit may be further configured to identify a transmission slot to transmit the first set of payloads to the first UWB anchor, wherein the transmission slot may be one of (i) the first slot that may be detected based on the position of the first identifier and (ii) the first slot and one of the plurality of contention access slots.

In some embodiments, the processing circuit may be further configured to determine whether a combined size of the first time stamp and the first initiation message may be within a limit of a maximum transfer unit.

In some embodiments, when the combined size may be within the limit of the maximum transfer unit, the first set of payloads may correspond to a first payload that may comprise the first time stamp and the first initiation message, wherein the processing circuit may transmit the first set of payloads to the first UWB anchor in one of the plurality of first unique frequency channels corresponding to the first slot.

In some embodiments, when the combined size may exceed the limit of the maximum transfer unit, the first set of payloads may correspond to a first payload and a second payload, wherein the first payload may comprise the first time stamp and the second payload may comprise the first initiation message, and wherein the processing circuit may transmit the first payload in one of the plurality of first unique frequency channels corresponding to the first slot, and the second payload in one of the frequency channels that is different from the plurality of first unique frequency channels.

In some embodiments, the maximum transfer unit may be based on one of a group consisting of (i) the combined size of the first time stamp and the first initiation message and (ii) a time period to transmit the first time stamp and the first initiation message to the first UWB anchor.

In some embodiments, the first initiation message may comprise one of (i) a distance parameter indicating the first distance, and (ii) a pseudo distance parameter associated with the first distance.

In some embodiments, the distance parameter may correspond to a spatial distance value.

In some embodiments, the pseudo distance parameter may include at least one of a group consisting of a received signal strength indicator (RSSI), a time of arrival (ToA), a time of flight (ToF), and an angle of arrival (AoA) associated the first initiation message.

In another embodiment, a device may comprise a first UWB anchor. The first UWB anchor may be configured to receive a first set of payloads that may comprise (i) a first time stamp indicating a time of generation of the first set of payloads and (ii) a first initiation message indicating a first distance between the UWB system and a second UWB anchor from a UWB system. The first UWB anchor may be further configured to determine a second distance between the UWB system and the first UWB anchor, and a location of the UWB system relative to the first UWB anchor and the second UWB anchor based on the first set of payloads. The first UWB anchor may be further configured to transmit a second initiation message indicating the second distance to the UWB system as a response to the first set of payloads.

In some embodiments, the first UWB anchor may determine the second distance based on the first time stamp. Further, the first UWB anchor may determine the location of the UWB system based on the first distance and second distance.

In some embodiments, the first UWB anchor may be further configured to assign a first priority value to the UWB system upon determination of the location of the UWB system. The first UWB anchor may be further configured to generate upon assigning the first priority value, a ranging message, wherein the ranging message may include a ranging management list (RML), wherein the RML may include a plurality of slots associated with a plurality of UWB systems that may be within an access control range of the first UWB anchor such that the plurality of slots may be indicative of proximity of the plurality of UWB systems to the UWB anchor, and wherein the UWB system may initiate authentication with the first UWB anchor based on a position of a first slot of the plurality of slots in the RML corresponding to the first priority value.

In yet another embodiment, a method may comprise receiving, by a processing circuit of a UWB system, a first initiation message from a first UWB anchor indicating a first distance between the UWB system and the first UWB anchor. The method may further comprise generating, by the processing circuit, a first set of payloads that may comprise (i) a first time stamp indicating a time of generation of the first set of payloads and (ii) the first initiation message. Further, the method may comprise transmitting, by the processing circuit, the first set of payloads to a second UWB anchor. The the first set of payloads are processed to determine (i) a second distance between the UWB system and the second UWB anchor, and (ii) a location of the UWB system relative to the first UWB anchor and the second UWB anchor.

While various embodiments of the present disclosure have been illustrated and described, it will be clear that the present disclosure is not limited to these embodiments only. Numerous modifications, changes, variations, substitutions, and equivalents will be apparent to those skilled in the art, without departing from the spirit and scope of the present disclosure, as described in the claims. Further, unless stated otherwise, terms such as "first" and "second" are used to arbitrarily distinguish between the elements such terms describe. Thus, these terms are not necessarily intended to indicate temporal or other prioritization of such elements.

**Claims**

1. An ultra-wideband (UWB) system, comprising:
   a processing circuit configured to:

   receive from a first UWB anchor, a first initiation message indicating a first distance between the UWB system and the first UWB anchor;
   generate a first set of payloads that comprises (i) a first time stamp indicating a time of generation of the first set of payloads and (ii) the first initiation message; and
   transmit the first set of payloads to a second UWB anchor, wherein the first set of payloads is processed to determine (i) a second distance between the UWB system and the second UWB anchor and (ii) a location of the UWB system relative to the first UWB anchor and the second UWB anchor.

2. The UWB system of claim 1, wherein the processing circuit is further configured to:

   receive upon transmitting the first set of payloads, a second initiation message indicating the second distance, from the second UWB anchor;
   generate a second set of payloads that comprises (i) a second time stamp indicating a time of generation of the second set of payloads and (ii) the first initiation message and the second initiation message; and
   transmit the second set of payloads to the first UWB anchor, wherein the second set of payloads is processed to determine (i) a third distance between the UWB system and the first UWB anchor and (ii) the location of the UWB system.

3. The UWB system of claim 2, wherein each of the first UWB anchor and the second UWB anchor is preconfigured with a fourth distance between the first UWB anchor and the second UWB anchor, and wherein each of the first UWB anchor and the second UWB anchor further determines the location of the UWB system based on the fourth distance.

4. The UWB system of claim 2 or 3,

wherein based on the location of the UWB system, the first UWB anchor assigns a first priority value to the UWB system, and the second UWB anchor assigns a second priority value to the UWB system, and
wherein the processing circuit is further configured to initiate authentication with the first UWB anchor based on the first priority value, and the second UWB anchor based on the second priority value.

5. The UWB system of any preceding claim, wherein the processing circuit is further configured to:

receive a setup message from at least one of the first UWB anchor and the second UWB anchor; and
create a ranging session for the first UWB anchor and the second UWB anchor, wherein the processing circuit receives the first initiation message from the first UWB anchor during a first phase of the ranging session, and the processing circuit receives a second initiation message from the second UWB anchor during a second phase of the ranging session.

6. The UWB system of any preceding claim, wherein the processing circuit is further configured to receive a first ranging message, wherein the first ranging message includes a ranging management list (RML), wherein the RML includes a plurality of slots associated with a plurality of UWB systems that are within an access control range of the first UWB anchor such that the plurality of slots are (i) indicative of proximity of the plurality of UWB systems to the first UWB anchor, and (ii) correspond to a plurality of first unique frequency channels, and wherein the UWB system is included in the plurality of UWB systems.

7. The UWB system of claim 6, wherein the plurality of slots comprise a plurality of identifiers associated with the plurality of UWB systems, wherein the plurality of UWB systems comprise the UWB system, the plurality of slots comprise a first slot, and the plurality of identifiers comprise a first identifier, and wherein the first slot comprises the first identifier associated with the UWB system.

8. The UWB system of claim 7, wherein the first ranging message further includes a plurality of contention access slots, and wherein the plurality of contention access slots correspond to frequency channels that are different from the plurality of first unique frequency channels.

9. The UWB system of claim 8, wherein the processing circuit is further configured to:

detect a position of the first identifier from the plurality of slots, wherein the processing circuit detects the position of the first identifier at the first slot; and
identify a transmission slot to transmit the first set of payloads to the first UWB anchor, wherein the transmission slot is one of (i) the first slot that is detected based on the position of the first identifier and (ii) the first slot and one of the plurality of contention access slots.

10. The UWB system of claim 9, wherein the processing circuit is further configured to determine whether a combined size of the first time stamp and the first initiation message is within a limit of a maximum transfer unit.

11. The UWB system of claim 10,

wherein when the combined size is within the limit of the maximum transfer unit, the first set of payloads corresponds to a first payload that comprises the first time stamp and the first initiation message, and
wherein the processing circuit transmits the first set of payloads to the first UWB anchor in one of the plurality of first unique frequency channels corresponding to the first slot.

12. The UWB system of claim 10 or 11,

**EP 4 632 422 A1**

wherein when the combined size exceeds the limit of the maximum transfer unit, the first set of payloads corresponds to a first payload and a second payload, wherein the first payload comprises the first time stamp and the second payload comprises the first initiation message, and

wherein the processing circuit transmits the first payload in one of the plurality of first unique frequency channels corresponding to the first slot, and the second payload in one of the frequency channels that is different from the plurality of first unique frequency channels.

13. The UWB system of any one of claims 10 to 12, wherein the maximum transfer unit is based on one of a group consisting of (i) the combined size of the first time stamp and the first initiation message and (ii) a time period to transmit the first time stamp and the first initiation message to the first UWB anchor.

14. The UWB system of any preceding claim,
    wherein the first initiation message comprises one of (i) a distance parameter indicating the first distance and (ii) a pseudo distance parameter associated with the first distance.

15. A method comprising:

    receiving, by a processing circuit of a UWB system, a first initiation message from a first UWB anchor indicating a first distance between the UWB system and the first UWB anchor;
    generating, by the processing circuit, a first set of payloads that comprises (i) a first time stamp indicating a time of generation of the first set of payloads and (ii) the first initiation message; and
    transmitting, by the processing circuit, the first set of payloads to a second UWB anchor, wherein the first set of payloads are processed to determine (i) a second distance between the UWB system and the second UWB anchor, and (ii) a location of the UWB system relative to the first UWB anchor and the second UWB anchor.

19

**FIG. 1**

EP 4 632 422 A1

EP 4 632 422 A1

200

**FIG. 2A**

**FIG. 2B**

EP 4 632 422 A1

300

| Processing circuit 132 | First UWB anchor 110 | Second UWB anchor 118 |

302
Generate setup message

304
Setup message

306
Create ranging session

308
Generate first set of payloads

310
First set of payloads

312
Generate first initiation message and first ranging message

314
First initiation message and first ranging message

316
Detect position of first identifier from plurality of slots in first ranging message

318
Generate second set of payloads

**FIG. 3A**

**FIG. 3B**

400

```
                    ( Start )
                        │
                        ▼
┌────────────────────────────────────────────────────────┐
│ Receive by processing circuit, setup message from first │  402
│ UWB anchor                                              │
└────────────────────────────────────────────────────────┘
                        │
                        ▼
┌────────────────────────────────────────────────────────┐
│ Generate ranging session                                │  404
└────────────────────────────────────────────────────────┘
                        │
                        ▼
┌────────────────────────────────────────────────────────┐
│ Generate first set of payloads that includes first      │  406
│ time stamp                                              │
└────────────────────────────────────────────────────────┘
                        │
                        ▼
┌────────────────────────────────────────────────────────┐
│ Transmit first set of payloads to first UWB anchor      │  408
└────────────────────────────────────────────────────────┘
                        │
                        ▼
┌────────────────────────────────────────────────────────┐
│ Receive by processing circuit, first initiation message │  410
│ and first ranging message, from first UWB anchor in     │
│ response to first set of payloads                       │
└────────────────────────────────────────────────────────┘
                        │
                        ▼
┌────────────────────────────────────────────────────────┐
│ Detect position of first identifier associated with UWB │  412
│ system from plurality of slots of first RML included in │
│ first ranging message                                   │
└────────────────────────────────────────────────────────┘
                        │
                        ▼
                      ( A )
```

# FIG. 4A

FIG. 4B

EP 4 632 422 A1

FIG. 4C

400

B

Detect position of first identifier associated with UWB system from plurality of slots of second RML included in second ranging message — 430

Is combined size of third time stamp, first and second initiation messages within limit of maximum transfer unit? — 432

No

Yes

Generate third payload of third set of payloads that includes third time stamp — 434

Generate fourth payload of third set of payloads that includes first initiation message and second initiation message — 436

Identify first slot of second RML based on position of first identifier in second RML, and one of plurality of contention access slots of second ranging message as transmission slot — 438

Generate third payload of third set of payloads that includes third time stamp, first initiation message, and second initiation message — 440

Identify first slot of second RML as transmission slot based on position of first identifier in second RML — 442

Transmit third set of payloads to first UWB anchor for determination of location of UWB system relative to first UWB anchor and second UWB anchor — 444

Stop

EP 4 632 422 A1

500

```
           ┌─────────────┐
           │    Start    │
           └─────────────┘
                  │
                  ▼
┌────────────────────────────────────────────────────────┐
│         Generate by first UWB anchor, setup message     │  502
└────────────────────────────────────────────────────────┘
                  │
                  ▼
┌────────────────────────────────────────────────────────┐
│   Transmit setup message to processing circuit of UWB   │  504
│                       system                            │
└────────────────────────────────────────────────────────┘
                  │
                  ▼
┌────────────────────────────────────────────────────────┐
│  Receive first set of payloads from processing circuit  │  506
│          in response to setup message                   │
└────────────────────────────────────────────────────────┘
                  │
                  ▼
┌────────────────────────────────────────────────────────┐
│  Determine first distance between UWB system and first  │  508
│                      UWB anchor                         │
└────────────────────────────────────────────────────────┘
                  │
                  ▼
┌────────────────────────────────────────────────────────┐
│  Generate first initiation message indicating first     │  510
│         distance, and first ranging message             │
└────────────────────────────────────────────────────────┘
                  │
                  ▼
┌────────────────────────────────────────────────────────┐
│  Transmit first initiation message and first ranging    │  512
│           message to processing circuit                 │
└────────────────────────────────────────────────────────┘
                  │
                  ▼
┌────────────────────────────────────────────────────────┐
│  Receive by second UWB anchor, second set of payloads   │  514
│              from processing circuit                    │
└────────────────────────────────────────────────────────┘
                  │
                  ▼
┌────────────────────────────────────────────────────────┐
│ Determine second distance between UWB system and second │  516
│ UWB anchor, and location of UWB system relative to first│
│        UWB anchor and second UWB anchor                 │
└────────────────────────────────────────────────────────┘
                  │
                  ▼
┌────────────────────────────────────────────────────────┐
│ Generate second initiation message indicating second    │  518
│      distance, and second ranging message               │
└────────────────────────────────────────────────────────┘
                  │
                  ▼
               ┌─────┐
               │  A  │
               └─────┘
```

**FIG. 5A**

500

(A)

| Transmit second initiation message and second ranging message to processing circuit | 520 |

| Receive by first UWB anchor, third set of payloads from processing circuit | 522 |

| Determine third distance between UWB system and first UWB anchor, and location of UWB system relative to first UWB anchor and second UWB anchor | 524 |

Stop

**FIG. 5B**

Europäisches
Patentamt

European
Patent Office

Office européen
des brevets

# EUROPEAN SEARCH REPORT

**Application Number**

EP 25 16 9236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2023/224379 A1 (SAMSUNG ELECTRONICS CO LTD [KR]) 23 November 2023 (2023-11-23) <br> * figures 1, 8b * <br> * paragraphs [0110] - [0119] * <br> * paragraphs [0220] - [0238] * <br> - - - - - | 1-15 | INV. <br> G01S5/00 <br> G01S5/02 <br> G01S5/14 <br> G01S13/76 <br> G01S13/87 |
| A | KR 2021 0147723 A (SAMSUNG ELECTRONICS CO LTD [KR]) 7 December 2021 (2021-12-07) <br> * claims 1-13; figures 1-3 * <br> * paragraphs [0037], [0042], [0043] * <br> * paragraphs [0064] - [0072] * <br> * paragraphs [0085] - [0090] * <br> - - - - - | 1-15 | |
| A | US 2024/012133 A1 (KOO JONGHOE [KR] ET AL) 11 January 2024 (2024-01-11) <br> * figures 9-15 * <br> * paragraphs [0230] - [0409] * <br> - - - - - | 6-13 | |
| A | WO 2023/167858 A1 (QUALCOMM INC [US]) 7 September 2023 (2023-09-07) <br> * figures 5-17 * <br> * paragraphs [0073] - [0124] * <br> - - - - - | 6-13 | **TECHNICAL FIELDS SEARCHED (IPC)** <br><br> G01S |

The present search report has been drawn up for all claims

| Place of search | Date of completion of the search | Examiner |
|---|---|---|
| Munich | 4 August 2025 | Krummenacker, Benoît |

EPO FORM 1503 03.82 (P04C01)

## ANNEX TO THE EUROPEAN SEARCH REPORT
## ON EUROPEAN PATENT APPLICATION NO.

EP 25 16 9236

This annex lists the patent family members relating to the patent documents cited in the above-mentioned European search report.
The members are as contained in the European Patent Office EDP file on
The European Patent Office is in no way liable for these particulars which are merely given for the purpose of information.

04-08-2025

| Patent document cited in search report | | | Publication date | Patent family member(s) | | | Publication date |
|---|---|---|---|---|---|---|---|
| WO 2023224379 | A1 | | 23-11-2023 | CN | 119213390 | A | 27-12-2024 |
| | | | | KR | 20230161283 | A | 27-11-2023 |
| | | | | WO | 2023224379 | A1 | 23-11-2023 |
| KR 20210147723 | A | | 07-12-2021 | NONE | | | |
| US 2024012133 | A1 | | 11-01-2024 | CN | 119452268 | A | 14-02-2025 |
| | | | | EP | 4548119 | A1 | 07-05-2025 |
| | | | | KR | 20240008207 | A | 18-01-2024 |
| | | | | US | 2024012133 | A1 | 11-01-2024 |
| | | | | WO | 2024014836 | A1 | 18-01-2024 |
| WO 2023167858 | A1 | | 07-09-2023 | CN | 118765509 | A | 11-10-2024 |
| | | | | EP | 4487582 | A1 | 08-01-2025 |
| | | | | EP | 4546825 | A2 | 30-04-2025 |
| | | | | US | 2025056627 | A1 | 13-02-2025 |
| | | | | WO | 2023167858 | A1 | 07-09-2023 |

EPO FORM P0459

For more details about this annex : see Official Journal of the European Patent Office, No. 12/82